(19)

**Europäisches Patentamt**

**European Patent Office**

**Office européen des brevets**

(11) **EP 3 951 435 B1**

(12) **EUROPEAN PATENT SPECIFICATION**

(45) Date of publication and mention
of the grant of the patent:
**01.05.2024   Bulletin 2024/18**

(21) Application number: **20189121.5**

(22) Date of filing: **03.08.2020**

(51) International Patent Classification (IPC):
**G01T 1/178** *(2006.01)*        **G01T 7/00** *(2006.01)*

(52) Cooperative Patent Classification (CPC):
**G01T 1/178; G01T 7/00**

(54) **METHOD AND SYSTEM FOR STACK MONITORING OF RADIOACTIVE NUCLIDES**

VERFAHREN UND SYSTEM ZUR ÜBERWACHUNG VON DEM RAUCHGAS VON RADIOAKTIVEN NUKLIDEN

PROCÉDÉ ET SYSTÈME DE SURVEILLANCE DE FUMÉE DE NUCLÉIDES RADIOACTIFS

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(43) Date of publication of application:
**09.02.2022   Bulletin 2022/06**

(73) Proprietor: **Rotem Ind. Ltd.**
**8680600 Mishor Yamin (IL)**

(72) Inventors:
  • **Osovizky, Alon**
    **85338 Lehavim (IL)**
  • **Ginzburg, Dimitry**
    **8446844 Beer-Sheva (IL)**

(74) Representative: **Kancelaria Eupatent.pl Sp. z.o.o**
**Ul. Kilinskiego 185**
**90-348 Lodz (PL)**

(56) References cited:
**CN-U- 208 060 728      JP-A- 2006 329 784**
**US-B1- 9 435 899      US-B1- 9 857 480**

**Description**

FIELD

The disclosed subject matter relates to detection of beta emitting isotopes, and specifically to monitoring and quantifying the activity concentration of radioactive effluents in gas flowing through a ventilation stack.

BACKGROUND OF THE INVENTION

Facilities for producing radioactive isotopes, such as a radiopharmaceutical production plant for providing isotopes used in Positron Emission Tomography (PET) imaging, may routinely release nonhazardous amounts of radioactive effluents through a ventilation stack into the surrounding atmosphere. To safeguard nearby populations from radiation hazards, national regulations mandate the continuous monitoring of isotope activity concentration, as measured for example in units of Bequerels per milliliter (Bq/ml) or Curies per cubic inch (Ci/cu.in.), in gas flowing through the stack.

There is a wide variety of radioactive isotope effluents, each having a different chemical species, a different energy spectrum of emitted radiation, and a different calibration factor for converting raw detector rates into isotope activity concentration. Furthermore, the inner walls of the stack, the interior of air filters, and other, more remote areas of the facility may contribute to background gamma radiation which is detected by a stack monitor, but which is not related to radioactive nuclides released from the stack into the environment. The stack monitor must compensate for this background radiation, and ideally, in a manner which does not depend on the specific geometry and material composition of the stack walls.

Japanese patent application JP2006329784A to Mogi Kenichi et al., dated 7-December-2006 and entitled "A Radiation Monitor" discloses a radioactive dust monitor for measuring fission products and activation products, which includes a sampling unit equipped with a measuring unit corresponding to a vessel, a lead shield for reducing the influence of environmental $\gamma$ rays, a pump for sampling sample air, and a filter paper for collecting particulate radioactive material to be measured.

SUMMARY OF THE INVENTION

The disclosed subject matter provides a method and system for monitoring a stack flow containing one or more radioactive nuclide species. The monitoring includes identifying the nuclide species present in the stack flow, and providing an accurate background-corrected measurement of the released radiation activity concentration for each of the identified nuclide species.

The system is defined in independent claim 1 and includes a first detector with a predetermined first sensitivity to gamma radiation; a second detector with a predetermined second sensitivity to gamma radiation and a predetermined sensitivity to beta particles produced by the one or more radioactive nuclides; a flow meter for measuring a flow rate of the stack flow; as well as an electronic signal processor which receives signals from the first detector, the second detector, and the flow meter. The electronic signal processor includes energy window discrimination and is configured to identify one or more nuclide species present in the stack flow, and to calculate a background-corrected value of radiation activity concentration for each of the identified nuclide species.

According to the claimed invention, the background-corrected value depends upon a ratio between the first and second sensitivities to gamma radiation.

According to a feature of certain preferred implementations of the system, the system further comprises an enclosure which is proximal to the second detector and which defines a detection volume.

According to a further feature of certain preferred implementations of the system, the first detector includes a scintillator material selected from a group consisting of doped Sodium Iodide, doped Cesium Iodide, and Bismuth Germanate.

According to a further feature of certain preferred implementations of the system, the second detector includes a scintillator material selected from a group consisting of Anthracene, Stilbene, and Naphthalene.

According to a further feature of certain preferred implementations of the system, the one or more radioactive nuclides include a positron-emitting nuclide.

According to a further feature of certain preferred implementations of the system, the one or more radioactive nuclides include a nuclide selected from a group consisting of Fluorine-18, Carbon-11, Nitrogen-13, Oxygen-15, and Gallium-68.

According to yet another feature of certain preferred implementations of the system, the energy window discrimination includes two or more energy windows, each defined by a lower limit on kinetic energy.

The method for monitoring a stack flow containing one or more radioactive nuclides is defined in independent claim 8 and includes the steps of

(a) providing an electronic signal processor with energy window discrimination which receives signals from a first detector having a first sensitivity to gamma radiation; a second detector having a second sensitivity to gamma radiation and a sensitivity to beta particles produced by the one or more radioactive nuclides; and a flow meter for measuring a flow rate of the stack flow;

(b) pre-determining sensitivity calibration factors for the first and second detectors and for different nuclides;

(c) calculating a background-corrected, beta-only signal for each energy window;

(d) identifying one or more nuclide species present in the stack flow by comparing the beta-only signals of different energy windows; and

(e) calculating a background-corrected value of the radiation activity concentration for each of the identified nuclide species,

wherein the
calculation of a background-corrected beta-only signal in step (c) depends upon a ratio between the first and second sensitivities to gamma radiation.

According to a feature of certain preferred implementations of the method, step (a) further includes providing an enclosure which is proximal to the second detector and which defines a detection volume.

According to yet another feature of certain preferred implementations of the method, step (e) further includes calculating a background-corrected value of a total radiation activity for each of the identified nuclide species.

BRIEF DESCRIPTION OF THE DRAWINGS

The invention is herein described, by way of example only, with reference to the accompanying figures.

FIG. 1: Block diagram of an exemplary stack monitoring system, according to the invention.

FIGs. 2(a) and 2(b): Cross-sectional drawings of exemplary first and second detectors, respectively, according to the invention.

FIG. 3: Exemplary energy distribution produced by exposing the second detector to a Strontium 90 (Sr-90) beta-emitting calibration source.

FIG. 4: An exemplary graph of the positron energy emission distribution of several PET nuclides.

FIG. 5: A block diagram of an exemplary stack monitoring method, according to the invention.

DETAILED DESCRIPTION

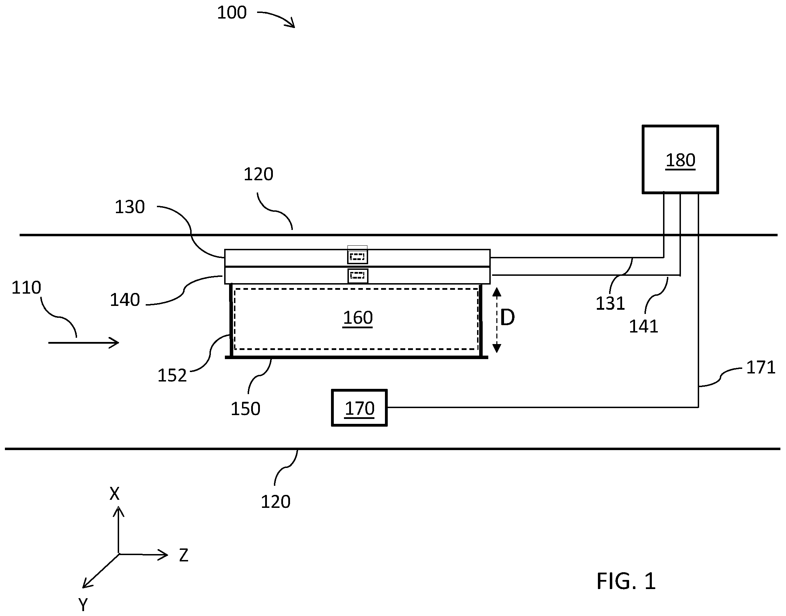

Referring now to the drawings, FIG. 1 shows a diagram of an exemplary stack monitoring system 100, according to the invention. X-Y-Z reference axes indicate the orientation of the system 100 with respect to the duct walls 120. A fluid (e.g. air) containing radioactive nuclide effluents flows in the direction indicated by arrow 110, which is substantially parallel to the Z-axis. The cross-section of the duct may have a rectangular shape, a circular shape, or some other shape. First detector 130 and second detector 140 are placed back-to-back with their radiation-sensitive surfaces exposed to the fluid flow. Detector 130 detects gamma radiation with high efficiency, and consists for example of a high atomic number (high-Z) scintillator material, such as doped Sodium Iodide. Detector 140 is configured to detect both gamma rays and beta particles, and consists for example of a plastic scintillator material. Detectors 130 and 140 convert scintillator light pulses into electrical output signals 131 and 141, respectively, using optical and electrical components, such as light-guides, photocathodes, and photomultiplier tubes. Flow meter 170 measures the fluid flow velocity, for example in units of meters/second, and generates an output signal 171. Signals 131, 141, and 171 are transmitted to signal processor 180 by means of electrical leads, fiber optic cables, wireless communication, or any combination thereof. System 100 may include integrated power supplies (not shown in the figure) which provide electrical power to detectors 130 and 140, to flow meter 170, and to signal processing unit 180. Alternatively, some or all of the power supplies may be external to system 100.

The detection volume 160 of detector 140 is defined by an enclosure consisting of an enclosure plate 150 and an enclosure supporting frame 152, which has a negligible effect on air flow into volume 160. The size of volume 160 is proportional to the distance D between the plate 150 and the radiation sensitive surface of detector 140, as shown in FIG. 1. Defining the detection volume 160 as shown, the calibration factors used to calculate activity concentration may be predetermined in a prototype setup having one type of duct and then normalized for use in other duct types having different size, shape, cross-sectional area, and/or material composition.

As an alternative to defining the detection volume by means of an enclosure plate and supporting frame, the detection volume can be determined by the duct itself. In this case, the calibration factors are calculated using either simulation (e.g. Monte-Carlo based simulation) or controlled injection of a known activity into the duct. The calibration factors are then functions of the duct's cross-sectional form and area.

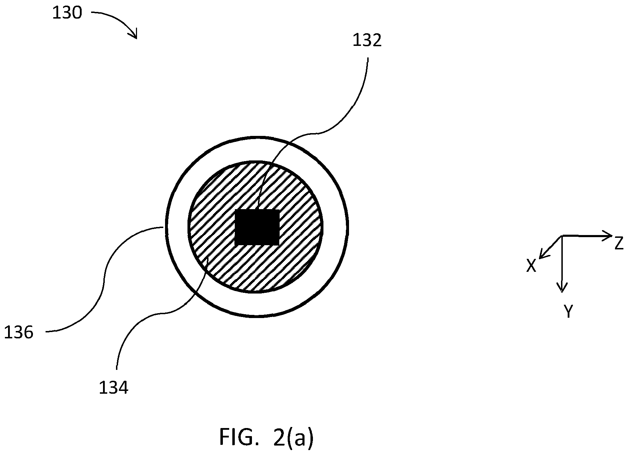

FIG. 2(a) shows a cross-sectional drawing of an exemplary first detector 130, which is configured to detect primarily gamma radiation. One source of the gamma radiation may be from the decay of nuclides trapped on stack duct surfaces or charcoal filters inside the stack. Another, more distant source of gamma radiation may be short-term radiation events originating from outside the stack duct, for example in the chemical hot laboratory where the radioactive isotopes are produced and prepared for shipping. These distant sources of gamma radiation are considered background radiation, since they do not originate from activity that flows through the stack and is released into the environment. Scintillator 132 is preferably made of a high atomic number (high-Z) material, such as doped Sodium Iodide (NaI(Tl)), doped Cesium Iodide (CsI(Tl)), or Bismuth Germanate (BGO). Scintillator 132 is surrounded by a cylindrical detector shell 134, and the entire assembly is protected by a weatherproof detector housing 136. Shell 134 is preferably made of Aluminum having an exemplary thickness of 0.1 to 0.3 mm.; housing 136 is preferably made of stainless steel (e.g. SS-3041) having an exemplary thickness of about 0.03 to 0.08 mm..

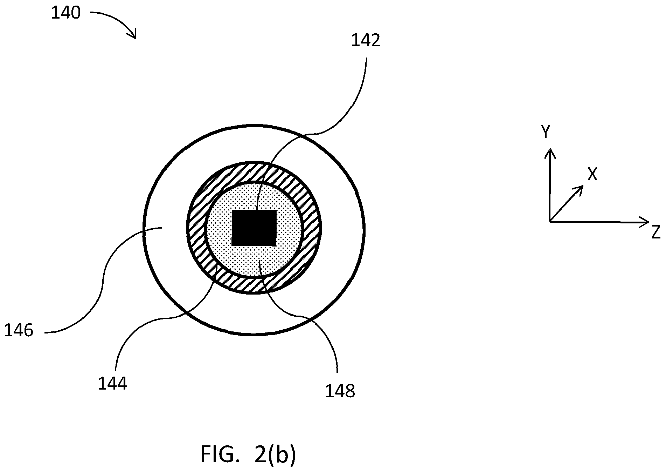

FIG. 2(b) shows a cross-sectional drawing of an exemplary second detector 140, which is configured to detect both gamma radiation and beta particles (in this case, positrons) emitted by a radioactive isotope effluent. Scintillator 142 is preferably made of a low atomic number (low-Z) material with a high beta stopping power, such as organic crystals of Anthracene, Stilbene, or Naphthalene. Insofar as positrons generally have short mean free paths in matter, typically less than 1 mm., maximum detection sensitivity is achieved when scintillator 142 is in direct contact with the air flow. Detector shell 144 and weatherproof detector housing 146 are typically similar in shape and material composition to shell 134 and housing 136 of detector 130. Detector 140 includes a light-tight thin layer 148, which consists, for example, of a thin aluminized Mylar film. Layer 148 enables positrons to pass through to the scintillator while blocking light photons that would otherwise cause scintillator noise.

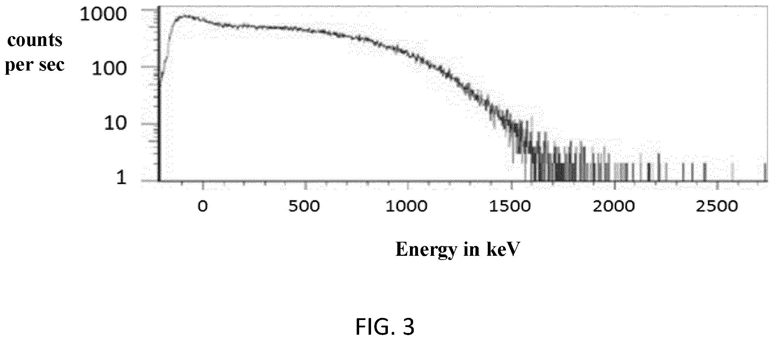

FIG. 3 shows an exemplary energy distribution produced by exposing the second detector to a beta-emitting Strontium 90 (Sr-90) calibration source. The detailed distribution was measured using a high-resolution multi-channel analyzer. The scale of the vertical axis is logarithmic.

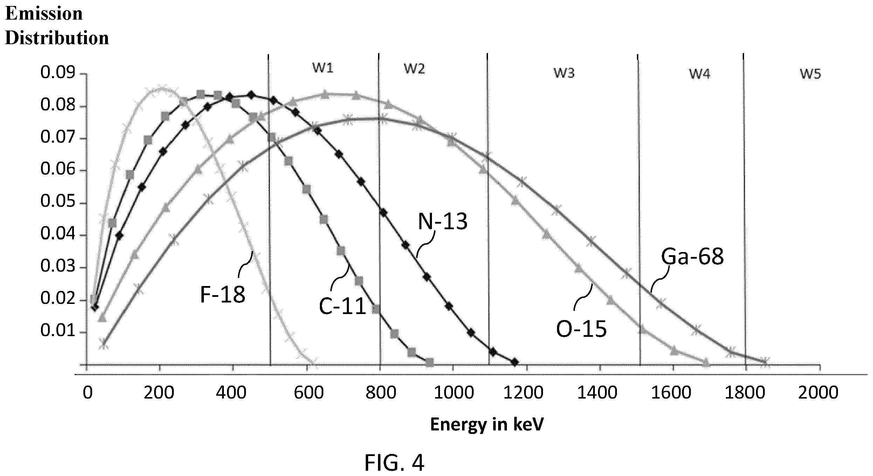

When more than one species of nuclide is present in the stack flow, it is necessary to identify the radiation activity concentration of each individual nuclide species. Radioactive isotopes produce beta particles (e.g. positrons) whose kinetic energy spectra are characteristic of the isotope species. For example, FIG. 4 shows normalized positron energy emission distributions for five nuclides commonly used in positron emission tomography (PET). The high energy tails terminate at maximum kinetic energies (Emax) given in the following table.

TABLE 1: Nuclide Species

| Nuclide | Symbol | Emax (keV) |
|---|---|---|
| Fluorine-18 | F-18 | 634 |
| Carbon-11 | C-11 | 960 |
| Nitrogen-13 | N-13 | 1199 |
| Oxygen-15 | O-15 | 1732 |
| Gallium-68 | Ga-68 | 1920 |

Detector 140 is designed to be sensitive to low levels of incident radiation (for example, 1000 Bq/m$^3$) from the nuclides present in the stack, while being relatively less sensitive to 511 keV gamma rays. The material composition and thickness of scintillator 142 are selected in accordance with previously determined nuclide stopping distances for incident kinetic energies up to Emax.

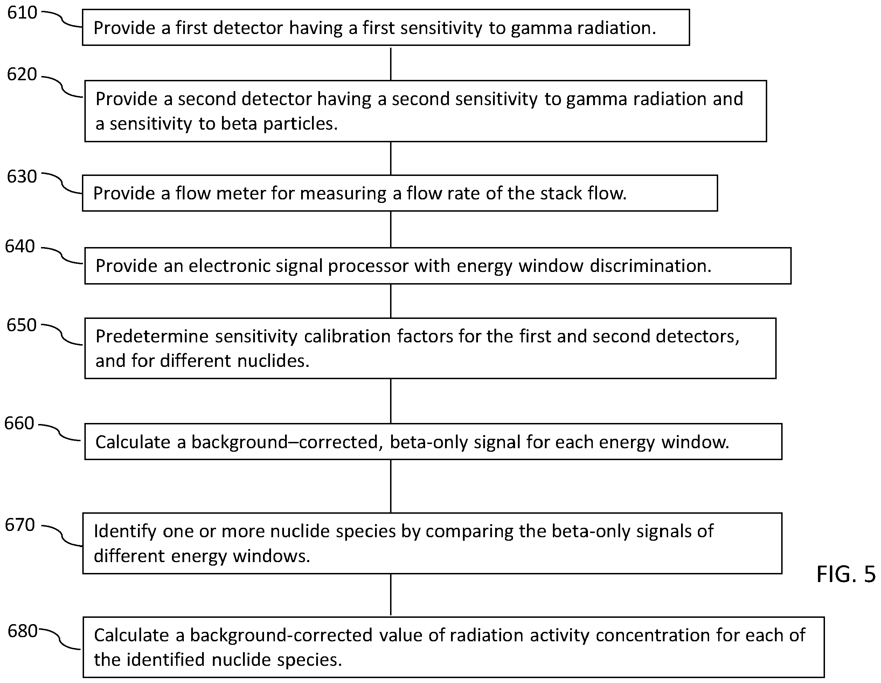

Electronic signal processor 180 supports energy windows discrimination, enabling nuclide identification. The energy windows W1-W5 are shown graphically in FIG. 5 by vertical lines. Exemplary lower and upper limits for the energy windows are given in the following table.

TABLE 2: Energy Windows

| Energy Window | Lower Limit (keV) | Upper Limit (keV) | Nuclide Identified |
|---|---|---|---|
| W1 | 500 | 800 | F-18 |
| W2 | 800 | 1100 | C-11 |
| W3 | 1100 | 1500 | N-13 |
| W4 | 1500 | 1800 | O-15 |
| W5 | 1800 | open window | Ga-68 |

The ranges of the pre-determined energy windows are chosen so that the Emax values associated with the different nuclides of interest (as given in TABLE 1) all fall in different energy windows.

FIG. 5 shows a block diagram of an exemplary stack monitoring method, according to the invention. The steps of the method are as follows:

610: provide a first detector having a first sensitivity to gamma radiation;
620: provide a second detector having a second sensitivity to gamma radiation and a sensitivity to beta particles produced by one or more radioactive nuclides;
630: provide a flow meter for measuring a flow rate of a stack flow;
640: provide an electronic signal processor with energy window discrimination which receives signals from the first detector, the second detector, and the flow meter;
650: pre-determine sensitivity calibration factors for the first and second detectors (e.g. $\eta$'s, F, and sensitivity ratio R) and for different nuclides;
660: calculate a background-corrected, beta-only signal for each energy window;
670: identify nuclide species present in the stack flow by comparing the beta-only signals of different energy windows; and
680: calculate a background-corrected value of the radiation activity concentration for each of the identified nuclide species, using the background-corrected beta-only signals of step 660 and the pre-determined sensitivity calibration factors of step 650.

In step 660, the calculation of the background-corrected beta-only signal depends upon a pre-determined ratio, R, between the first and second sensitivities to gamma radiation. Step 620 may optionally include providing an enclosure which is proximal to the second detector, and which defines a detection volume. Furthermore, step 680 may optionally include calculating a background-corrected value of the total released radiation activity for each of the identified nuclide species.

Example

The following example provides additional specific details of the method of the invention, by way of example only. The exemplary method provides identification and measurement for each radioactive nuclide present in a stack flow.

Prior to the installation and use of a system 100 inside an isotope manufacturing facility, sensitivity calibration factors are pre-determined for the detectors 130 and 140 (method step 650), as follows. A prototype system is constructed according to the invention and placed inside a calibration duct. Air flowing over a calibrated radiation source, corresponding to one of the nuclides of interest in stack monitoring, such as F-18, is introduced into the calibration duct. Flow meter 170 measures the air velocity in units of m/s. By multiplying the flow rate by the cross-sectional area of the duct, the volume flow rate M is calculated, for example in units of cubic meters per second. When an enclosure plate 150 and enclosure supporting frame 152 are installed, the detection volume 160 is a known constant and the volume flow rate (M) depends only on the air velocity measured by the flow meter. Without the enclosure plate 150 and the frame 152, the detection volume is a detector length dimension multiplied by the duct cross-sectional area.

Prior to installation of the system 100 inside the duct 3, sensitivity calibration factors are pre-determined for the detectors 130 and 140, including:

i. sensitivity of the first detector to gamma rays, denoted by $\eta_{g\text{-}g}$ ;
ii. sensitivity of the second detector to gamma rays, denoted by $\eta_{p\text{-}g}$ ; and
iii. sensitivity of the second detector to beta particles (e.g. positrons), denoted by $\eta_{p\text{-}p}$.

The sensitivities are typically expressed in units of counts per second (cps) per millirad per hour (cps per mR/hr), or as dimensionless percentages (%) which are energy dependent. Note that the first detector is blocked for positrons by the second detector 140, so that the sensitivity of the first detector to positrons is effectively zero.

An additional calibration factor, F, is calculated as follows. Signal processor 180 receives output signal 131 as well output signals 141 for each of the five energy windows W1 through W5, all in units of cps. A known activity, in units of Bq, is introduced into the duct, and a calibration factor F, is then calculated, in units of $Bq/m^3$ per cps or $nCi/m^3$ per cps. The value of F is determined by dividing the known activity by the product of output signal 131 in cps, and the previously determined detection volume in cubic meters. The calibration process is repeated for other calibrated radiation sources, corresponding to other nuclides of interest in stack monitoring.

The calibration process is repeated using other ducts having different characteristics from those of the calibrating duct, such as size, shape or material composition, in order to determine whether these characteristics influence the values of the sensitivity calibration factors. For example, it may be necessary in some cases to adjust the sensitivity calibration factors by a dimensionless factor which depends upon the ratio between the cross-sectional area of a particular duct and the cross-sectional area of the calibration duct.

Furthermore, the sensitivity calibration factors of detectors 130 and 140 may require periodic (e.g. annual) maintenance, for example, by inserting a calibrated nuclide source into the duct and checking the accuracy of the measured activity concentrations.

After calibration of the prototype system, the system is ready to be used as a stack monitor. To calculate a background-corrected beta-only signal (method step 660), the following measurements are acquired in each energy window:

i. background count rate ($B_g$) of the first detector;
ii. background count rate ($B_p$) of the second detector;
iii. actual count rate ($C_g$) of the first detector; and
iv. actual count rate ($C_p$) of the second detector.

Background count rates are measured under conditions when there is no radiation present; actual count rates are measured with the stack flow on.

The measurements in each energy window are analyzed to determine which of the following scenarios applies:

i. No background radiation is present and no activity is released. In this case,

$$C_p \ \leq \ B_p + \ K_p \ \sigma(B_p)$$

and

$$C_g \ \leq \ B_g + \ K_g \ \sigma(B_g)$$

where $\sigma(B_g)$ and $\sigma(B_p)$ denote standard deviations of the background count rate measured in the first and second detectors, respectively. $K_p$ and $K_g$ are pre-determined constants for adjusting the detection thresholds corresponding to positrons and gamma rays, respectively. Exemplary values are $K_p = 5$ and $K_g = 3$.

ii. Radiation is present but no activity is released. This scenario occurs when the source of the gamma radiation is outside of the stack. For example, this may occur when isotope production is in operation or when a radiation source is being moved in the vicinity of the detectors. In this case,

$$C_p \ \geq \ B_p + \ K_p \ \sigma(B_p)$$

and

$$\frac{C_p}{C_g} < \frac{\eta_{p-g}}{\eta_{g-g}} = R$$

where $R = \eta_{p-g}/\eta_{g-g}$ denotes the gamma sensitivity ratio between the two detectors. In the second inequality, forming the ratio $C_p/C_g$ corrects for the effect of background gamma radiation. Note that, if log-units are used the division is replaced by subtraction, that is, $\log(C_p/C_g) = \log(C_p) - \log(C_g)$. The second inequality is satisfied when the ratio of the measured count rates in the two detectors is less than the gamma sensitivity ratio R.

iii. Radiation is present and activity is released. In this case, the nuclide species must be identified and the radiation activity concentration must be measured. The required conditions are as follows:

$$C_p \ \geq \ B_p + \ K_p \ \sigma(B_p)$$

and

$$\frac{C_p}{C_g} > \frac{\eta_{p-g}}{\eta_{g-g}}$$

and

$$\frac{C_p - C_p \cdot \eta_{p-p}}{C_g} = K \ \frac{\eta_{p-g}}{\eta_{g-g}}$$

where the pre-determined constant K typically has a value close to one. The numerator on the left hand side of the last equation corresponds to the measured count rate in the second detector ($C_p$) reduced by the count rate ($C_p \eta_{p-p}$) which is contributed by positrons. If the last equation is not satisfied, then there is additional gamma radiation outside the stack, which does not contribute to an activity release, and should therefore be subtracted from the count rate of the first detector.

When the conditions of scenario iii. are met, there is an activity release from the stack and the nuclide species is identified (method step 670) as follows. A count rate that is only present in energy window W1 indicates the presence of F-18. Similarly, a count rate that is only present in window W2, W3, W4, or W5 indicates the presence of C-11, N-13, 0-15, or Ga-68, respectively. The count rate of the identified species is then converted to a radiation activity concentration (in method step 680), denoted by A and having units of Bq/m$^3$. The value of A is equal to the product of $C_g$ and the calibration factor F. The total released radiation activity for the identified species is denoted by U and has units of Bq. The value of U is equal to the product of the radiation activity concentration, A, the volume air flow rate, M, in units of m$^3$/sec, and the time duration, in seconds, of the release.

It will be appreciated that the above descriptions are intended only to serve as examples, and that many other embodiments are possible within the scope of the present invention as defined in the appended claims.

## Claims

1. A system (100) for monitoring one or more radioactive nuclides present in a stack flow inside a duct (120), comprising:

   a first detector (130) having a predetermined first sensitivity to gamma *radiation;*
   a second detector (140) having a predetermined second sensitivity to gamma radiation and a predetermined sensitivity to beta particles produced by the one or more radioactive nuclides;
   a flow meter (170) for measuring a flow rate of the stack flow; and
   an electronic signal processor (180) for receiving signals from said first detector, said second detector, and said flow meter;
   the electronic signal processor comprises energy window discrimination and being configured to identify one or more nuclide species present in the stack flow,
   and to calculate a background-corrected value of radiation activity concentration for each of the identified nuclide species, said system being **characterized in that** said background-corrected value depends upon a ratio (R) between the first and second sensitivities to gamma radiation.

2. The system of claim 1 further comprising an enclosure (150) which is proximal to said second detector and which defines a detection volume.

3. The system of claim 1 wherein the first detector comprises a scintillator material selected from a group consisting of doped Sodium Iodide, doped Cesium Iodide, and Bismuth Germanate.

4. The system of claim 1 wherein the second detector comprises a scintillator material selected from a group consisting of Anthracene, Stilbene, and Naphthalene.

5. The system of claim 1 wherein the one or more radioactive nuclides comprise a positron-emitting nuclide.

6. The system of claim 1 wherein the one or more radioactive nuclides comprise a nuclide selected from a group consisting of Fluorine-18, Carbon-11, Nitrogen-13, Oxygen-15, and Gallium-68.

7. The system of claim 1 wherein said energy window discrimination comprises two or more energy windows, each defined by at least a lower limit on particle kinetic energy.

8. A method for monitoring a stack flow inside a duct (120) containing one or more radioactive nuclides, said method comprising the steps of:

  (a) providing (640) an electronic signal processor with energy window discrimination which receives signals from a first detector (130) having a first sensitivity to gamma radiation; a second detector (140) having a second sensitivity to gamma radiation and a sensitivity to beta particles produced by the one or more radioactive nuclides; and a flow meter (170) for measuring a flow rate of the stack flow;
  (b) pre-determining (650) sensitivity calibration factors for the first and second detectors and for different nuclides;
  (c) calculating (660) a background-corrected, beta-only signal for each energy window;
  (d) identifying (670) one or more nuclide species present in the stack flow by comparing the beta-only signals of different energy windows; and
  (e) calculating (680) a background-corrected value of the radiation activity concentration for each of the identified nuclide species, said method being **characterized in that** the calculation of a background-corrected beta-only signal in step (c) depends upon a ratio (R) between the first and second sensitivities to gamma radiation.

9. The method of claim 8 wherein step (a) further comprises providing an enclosure (150) which is proximal to said second detector and which defines a detection volume (160).

10. The method of claim 8 wherein step (e) further comprises calculating a background-corrected value of a total radiation activity for each of the identified nuclide species.


**Patentansprüche**

1. System (100) zum Überwachen eines oder mehrerer radioaktiven Nuklide, die in einer Schachtströmung im Inneren eines Kanals (120) vorhanden sind, das umfasst:

  einen ersten Detektor (130) mit einer vorbestimmten ersten Empfindlichkeit gegenüber Gammastrahlung;
  einen zweiten Detektor (140) mit einer vorbestimmten zweiten Empfindlichkeit gegenüber Gammastrahlung und einer vorbestimmten Empfindlichkeit gegenüber BetaTeilchen, die von dem einen oder den mehreren radioaktiven Nukliden produziert werden;
  einen Durchflussmesser (170) zum Messen einer Strömungsrate der Schachtströmung; und
  einen elektronischen Signalprozessor (180) zum Empfangen von Signalen von dem ersten Detektor, dem zweiten Detektor und dem Durchflussmesser;
  wobei der elektronische Signalprozessor eine Energiefensterunterscheidung umfasst und so konfiguriert ist, dass er eine oder mehrere Nuklidspezies identifiziert, die in der Schachtströmung vorhanden sind, und dass er einen hintergrundkorrigierten Wert einer Strahlungsaktivitätskonzentration für jede der identifizierten Nuklidspezies berechnet,
  wobei das System **dadurch gekennzeichnet ist, dass** der hintergrundkorrigierte Wert von einem Verhältnis (R) zwischen der ersten und der zweiten Empfindlichkeit gegenüber Gammastrahlung abhängt.

2. System nach Anspruch 1, das ferner ein Gehäuse (150) umfasst, das proximal zu dem zweiten Detektor angeordnet ist und das ein Detektionsvolumen definiert.

3. System nach Anspruch 1, wobei der erste Detektor ein Szintillatormaterial umfasst, das aus einer Gruppe ausgewählt ist, die aus dotiertem Natriumiodid, dotiertem Cäsiumiodid und Wismutgermanat besteht.

4. System nach Anspruch 1, wobei der zweite Detektor ein Szintillatormaterial umfasst, das aus einer Gruppe ausgewählt ist, die aus Anthracen, Stilben und Naphthalen besteht.

5. System nach Anspruch 1, wobei das eine oder die mehreren radioaktiven Nuklide ein positronenemittierendes Nuklid umfassen.

6. System nach Anspruch 1, wobei das eine oder die mehreren radioaktiven Nuklide ein Nuklid umfassen, das aus einer Gruppe ausgewählt ist, die aus Fluor-18, Kohlenstoff-11, Stickstoff-13, Sauerstoff-15 und Gallium-68 besteht.

**7.** System nach Anspruch 1, wobei die Energiefensterunterscheidung zwei oder mehr Energiefenster umfasst, die jeweils durch zumindest eine untere Grenze bezüglich kinetischer Teilchenenergie definiert sind.

**8.** Verfahren zum Überwachen einer Schachtströmung innerhalb eines Kanals (120), der eine oder mehrere radioaktive Nuklide enthält, wobei das Verfahren die Schritte umfasst:

(a) Bereitstellen (640) eines elektronischen Signalprozessors mit Energiefensterunterscheidung, der Signale von einem ersten Detektor (130) mit einer ersten Empfindlichkeit gegenüber Gammastrahlung; einem zweiten Detektor (140) mit einer zweiten Empfindlichkeit gegenüber Gammastrahlung und einer Empfindlichkeit gegenüber Betateilchen, die durch das eine oder die mehreren radioaktiven Nuklide produziert werden; und einem Durchflussmesser (170) zum Messen einer Durchflussrate der Schachtströmung empfängt;

(b) Vorbestimmen (650) von Empfindlichkeitskalibrierungsfaktoren für den ersten und den zweiten Detektor und für unterschiedliche Nuklide;

(c) Berechnen (660) eines hintergrundkorrigierten Nur-Beta-Signals für jedes Energiefenster;

(d) Identifizieren (670) einer oder mehrerer Nuklidspezies, die in der Schachtströmung vorhanden sind, durch Vergleichen der Nur-Beta-Signale verschiedener Energiefenster; und

(e) Berechnen (680) eines hintergrundkorrigierten Werts der Strahlungsaktivitätskonzentration für jede der identifizierten Nuklidspezies, wobei das Verfahren **dadurch gekennzeichnet ist, dass** das Berechnen eines hintergrundkorrigierten Nur-Beta-Signals in Schritt (c) von einem Verhältnis (R) zwischen der ersten und der zweiten Empfindlichkeit gegenüber Gammastrahlung abhängt.

**9.** Verfahren nach Anspruch 8, wobei Schritt (a) ferner das Bereitstellen eines Gehäuses (150) umfasst, das proximal zu dem zweiten Detektor angeordnet ist und das ein Detektionsvolumen (160) definiert.

**10.** Verfahren nach Anspruch 8, wobei Schritt (e) ferner das Berechnen eines hintergrundkorrigierten Werts einer Gesamtstrahlungsaktivität für jede der identifizierten Nuklidspezies umfasst.

**Revendications**

**1.** Système (100) pour surveiller un ou plusieurs nucléides radioactifs présents dans un flux de cheminée à l'intérieur d'un conduit (120), comprenant :

un premier détecteur (130) ayant une première sensibilité prédéterminée au rayonnement gamma ;

un second détecteur (140) ayant une seconde sensibilité prédéterminée au rayonnement gamma et une sensibilité prédéterminée aux particules bêta produites par les un ou plusieurs nucléides radioactifs ;

un débitmètre (170) pour mesurer un débit du flux de cheminée ; et

un processeur (180) de signal électronique destiné à recevoir des signaux provenant dudit premier détecteur, dudit second détecteur et dudit débitmètre ;

le processeur de signal électronique comprend une discrimination de fenêtre d'énergie et étant configuré pour identifier une ou plusieurs espèces de nucléides présentes dans le flux de cheminée, et pour calculer une valeur corrigée en fonction du bruit de fond de concentration d'activité de rayonnement pour chacune des espèces de nucléides identifiées, ledit système étant **caractérisé en ce que** ladite valeur corrigée en fonction du bruit de fond dépend d'un rapport (R) entre les première et seconde sensibilités au rayonnement gamma.

**2.** Système selon la revendication 1, comprenant en outre une enceinte (150) qui est proximale audit second détecteur et qui définit un volume de détection.

**3.** Système selon la revendication 1, dans lequel le premier détecteur comprend un matériau scintillateur choisi dans un groupe consistant en iodure de sodium dopé, iodure de césium dopé et germanate de bismuth.

**4.** Système selon la revendication 1, dans lequel le second détecteur comprend un matériau scintillateur choisi dans un groupe consistant en anthracène, stilbène et naphtalène.

**5.** Système selon la revendication 1, dans lequel les un ou plusieurs nucléides radioactifs comprennent un nucléide émetteur de positrons.

**6.** Système selon la revendication 1, dans lequel les un ou plusieurs nucléides radioactifs comprennent un nucléide choisi dans un groupe consistant en fluor-18, carbone-11, azote-13, oxygène-15 et gallium-68.

7. Système selon la revendication 1, dans lequel ladite discrimination de fenêtre d'énergie comprend deux ou plus de deux fenêtres d'énergie, chacune définie par au moins une limite inférieure d'énergie cinétique de particule.

8. Procédé pour surveiller un flux de cheminée à l'intérieur d'un conduit (120) contenant un ou plusieurs nucléides radioactifs, ledit procédé comprenant les étapes de :

(a) fourniture (640) d'un processeur de signal électronique avec discrimination de fenêtre d'énergie qui reçoit des signaux provenant d'un premier détecteur (130) ayant une première sensibilité au rayonnement gamma ; un second détecteur (140) ayant une seconde sensibilité au rayonnement gamma et une sensibilité aux particules bêta produites par les un ou plusieurs nucléides radioactifs ; et un débitmètre (170) pour mesurer un débit du flux de cheminée ;
(b) la prédétermination (660) de facteurs d'étalonnage de sensibilité pour les premier et second détecteurs et pour différents nucléides ;
(c) le calcul (660) d'un signal bêta uniquement, corrigé en fonction du bruit de fond, pour chaque fenêtre d'énergie ;
(d) l'identification (670) d'une ou plusieurs espèces de nucléides présentes dans le flux de cheminée en comparant les signaux bêta uniquement de différentes fenêtres d'énergie ; et
(e) le calcul (680) d'une valeur corrigée en fonction du bruit de fond de la concentration d'activité de rayonnement pour chacune des espèces de nucléides identifiées, ledit procédé étant **caractérisé en ce que** le calcul d'un signal bêta uniquement, corrigé en fonction du bruit de fond, dans l'étape (c) dépend d'un rapport (R) entre les première et seconde sensibilités au rayonnement gamma.

9. Procédé selon la revendication 8, dans lequel l'étape (a) comprend en outre la fourniture d'une enceinte (150) qui est proximale audit second détecteur et qui définit un volume de détection (160).

10. Procédé selon la revendication 8, dans lequel l'étape (e) comprend en outre le calcul d'une valeur corrigée en fonction du bruit de fond d'une activité de rayonnement totale pour chacune des espèces de nucléides identifiées.

FIG. 1

EP 3 951 435 B1

FIG. 2(a)

FIG. 2(b)

EP 3 951 435 B1

FIG. 3

FIG. 4

610 ── Provide a first detector having a first sensitivity to gamma radiation.

620 ── Provide a second detector having a second sensitivity to gamma radiation and a sensitivity to beta particles.

630 ── Provide a flow meter for measuring a flow rate of the stack flow.

640 ── Provide an electronic signal processor with energy window discrimination.

650 ── Predetermine sensitivity calibration factors for the first and second detectors, and for different nuclides.

660 ── Calculate a background–corrected, beta-only signal for each energy window.

670 ── Identify one or more nuclide species by comparing the beta-only signals of different energy windows.

FIG. 5

680 ── Calculate a background-corrected value of radiation activity concentration for each of the identified nuclide species.

**EP 3 951 435 B1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description

- JP 2006329784 A, Mogi Kenichi